## Europäisches Patentamt
## European Patent Office
## Office européen des brevets

(19)

(11) Veröffentlichungsnummer: **0 038 553**
**A2**

(12) **EUROPÄISCHE PATENTANMELDUNG**

(21) Anmeldenummer: **81103009.7**

(22) Anmeldetag: **21.04.81**

(51) Int. Cl.³: **C 05 G 3/00**

(30) Priorität: **22.04.80 HU EN000974**

(43) Veröffentlichungstag der Anmeldung:
**28.10.81 Patentblatt 81/43**

(84) Benannte Vertragsstaaten:
**CH DE FR GB LI SE**

(71) Anmelder: **ENERGIAGAZDALKODASI INTEZET**
**33, Bem-rakpart**
**H-1027 Budapest II(HU)**

(72) Erfinder: **Toronyi, Vilmos**
**Pasaréti ut 169**
**Budapest II(HU)**

(74) Vertreter: **Beszédes, Stephan G. Dr.**
**Münchener Strasse 80a Postfach 1168**
**D-8060 Dachau(DE)**

(54) **Kunstdünger zur Kopfdüngung von schneebedeckten Saaten, insbesondere Herbstaussaaten, und mehrjährigen Pflanzen sowie ihre Verwendung.**

(57) Gegenstand der Erfindung sind Kunstdünger zur Kopfdüngung von schneebedeckten Saaten, insbesondere Herbstaussaaten, und mehrjährigen Pflanzen, welche mit 0,0001 bis 3 Gew.-% von 1 oder mehr dunklen Farbstoff(en) und/oder 7 bis 93 Gew.-% von 1 oder mehr inerten Zusatzstoff(en) dunkel gefärbt sind.

Ferner ist Gegenstand der Erfindung die Verwendung dieser gefärbten Kunstdünger durch Ausstreuen in an sich bekannter Weise auf das Saatgebiet.

Durch die dunkle Färbung dieser Kunstdünger erwärmen sie sich schneller als ihre Umgebung und die einzelnen Teilchen sinken in die Schneedecke ein. Dadurch können sie im Falle eines späteren Regens oder von plötzlicher Schneeschmelze nicht mehr fortgewaschen werden. Durch das Einsinken rufen die Teilchen Löcher, die der Belüftung der Saat dienen und gleichzeitig die Wärmeisolationsfähigkeit des Schnees verbessern, hervor. Die Schneeschmelze tritt in den so gedüngten Gebieten etwas zeitiger ein, weil durch den dunklen Kunstdünger die ganze Schneedecke erwärmt wird.

EP 0 038 553 A2

Die Erfindung betrifft Kunstdünger zur Kopfdüngung von schneebedeckten Saaten, insbesondere Herbstaussaaten, und mehrjährigen Pflanzen sowie ihre Verwendung, durch welche die Saat gelüftet, die Vegetationsperiode verlängert und der Boden verbessert wird.

In der Landwirtschaft ist die im Winter erfolgende Kopfdüngung ein bekanntes Verfahren. Dabei wird der Kunstdünger auch dann ausgebracht, wenn sich über der Saat noch eine zusammenhängende oder teilweise zusammenhängende Schneedecke befindet. Die bisher hierzu verwendeten Kunstdünger und Verfahren haben aber den Nachteil, daß im Falle einer plötzlichen Schneeschmelze oder von plötzlichen Regenfällen der gleichmäßig ausgebrachte Kunstdünger fortgewaschen wird, wodurch sich der Wirkungsgrad der Kopfdüngung stark verschlechtern kann.

Ferner ist es bekannt, die oberste vereiste Schicht der zusammenhängenden Schneedecke auf verschiedene mechanische Weise zu durchbohren oder zu zerbrechen, damit die bereits aufgegangene Saat nicht von der Luft abgeschlossen wird. Zu dieser Lüftung der Saat sind Maschinen oder landwirtschaftliche Nutztiere erforderlich.

Der Erfindung liegt die Aufgabe zugrunde, Kunstdünger zur Kopfdüngung von schneebedeckten Saaten, insbesondere Herbstaussaaten, und mehrjährigen Pflanzen sowie ihre Verwendung, durch welche der Wirkungsgrad der im Winter vorgenommenen Kunstdüngung verbessert wird und gleichzeitig der mit ihr verbundene Aufwand beträchtlich gesenkt wird, zu schaffen.

Gegenstand der Erfindung sind Kunstdünger zur Kopfdüngung von schneebedeckten Saaten, insbesondere Herbstaussaaten, und mehrjährigen Pflanzen, welche dadurch gekennzeichnet sind, daß sie mit 0,0001 bis 3 Gew.-% von 1 oder mehr dunklen Farbstoff(en) und/oder 7 bis 93 Gew.-% von 1 oder mehr inerten Zusatzstoff(en) dunkel gefärbt sind.

Gegenstand der Erfindung ist auch die Verwendung der erfindungsgemäßen gefärbten Kunstdünger zur Kopfdüngung von schneebedeckten Saaten, insbesondere Herbstaussaaten, und mehrjährigen Pflanzen durch Ausstreuen in an sich bekannter Weise auf das Saatgebiet.

Als Kunstdüngergrundmaterialien der erfindungsgemäßen Kunstdünger eignen sich alle üblichen und in der Landwirtschaft verwendeten Kunstdünger, wie Kalidünger, Thomasmehl, Stickstoffdünger und-NPK-Dünger.

Die dunklen Farbstoffe, welche die erfindungsgemäßen Kunstdünger aufweisen können, können rot, braun, blau, grün, dunkelgrau oder am zweckmäßigsten schwarz sein. Die Art der Farbe beeinflußt das Ergebnis der erfindungsgemäßen Verwendung nicht. Vorteilhaft können als Farbstoffe die auch für die Farbenherstellung üblichen Pigmente, wie Eisenoxydschwarz, dienen, mehr bevorzugt ist jedoch Ruß wegen des mit ihm verbundenen geringeren Aufwandes.

Die inerten Zusatzstoffe, welche die erfindungsgemäßen Kunstdünger enthalten können, sollen gut einmischbar und gut haftend sein.

Vorteilhaft können die erfindungsgemäßen Kunstdünger mit 1 oder mehr industriellen und/oder landwirtschaftlichen Abfall beziehungsweise Abfällen, wie Rotschlamm und/oder bei der Energieerzeugung anfallenden Stoffen, beispielsweise Kesselhausasche, Flugasche und/oder Schlacke, als inertem Zusatzstoff beziehungsweise inerten Zusatzstoffen dunkel gefärbt sein.
Der pH-Wert der inerten Zusatzstoffe ist nicht kritisch, er
kann im basischen Gebiet (pH-Wert = 7 bis 11) liegen, es
können jedoch auch sauer reagierende Stoffe (pH-Wert = 3 bis 7)
eingesetzt werden.

Die Erfindung nützt die Tatsache, daß die dunkel gefärbten Teilchen Strahlen besser absorbieren als ihre Umgebung,
aus. Der auf der Schneedecke befindliche dunkel gefärbte Kunstdünger erwärmt sich durch den Sonnenschein schneller als seine
Umgebung, was zur Folge hat, daß selbst unter minimalen
Schmelzbedingungen (Kälte) der Schnee um die Teilchen herum
zu schmelzen beginnt und diese in die Schneedecke einsinken.
Dadurch entsteht ein Loch. Im weiteren Verlauf erwärmt sich
das Loch schon allein dadurch schneller, daß die einfallenden
Strahlen im Loch selbst von Wand zu Wand reflektiert werden
und im allgemeinen nicht aus dem Loch austreten.

Die gefärbten Kunstdüngerteilchen dringen immer tiefer
in den Schnee ein und können gegebenenfalls die ganze Schneedecke durchwandern. Die dadurch entstandenen Löcher, die auch
in den nicht gefrorenen Teil der Schneedecke hineinreichen,
sind an ihren Wänden nicht völlig mit Eis bedeckt und lüften
dadurch die aufgegangene Saat.

Im Falle einer plötzlichen Schneeschmelze oder von plötzlichen Regenfällen wäscht das Wasser den Kunstdünger nicht vom
ursprünglichen Austraggebiet weg, da der Kunstdünger nicht mehr
auf der Oberfläche eines zusammenhängenden Eispanzers aufliegt,
sondern in die Schneedecke eingedrungen ist.

Die erfindungsgemäße Verwendung führt ferner dazu, daß die Schneeschmelze im Frühjahr etwas zeitiger eintritt. Um diese Zeitspanne wächst dann die ansonsten durch die geographischen Bedingungen bestimmte Vegetationsperiode.

Bei erneuten Nacht- und Bodenfrösten weist die Schneedecke infolge der durch das Einsinken des erfindungsgemäßen Kunstdüngers entstandenen Löcher eine schwammartige Struktur und daher gute Wärmeisolationseigenschaften auf. Diese Struktur führt ferner dazu, daß, wenn die Temperatur $0^{\circ}C$ übersteigt, zuerst die Hüllen der Lufteinschlüsse schmelzen. Wegen der Lochwirkung wird nicht nur die Wärme der Sonnenstrahlen mit hoher Wirksamkeit gespeichert, sondern auch die Möglichkeit zum Eindringen von warmer Luft geboten.

Die Zusatzstoffe, mit welchen die Kunstdünger erfindungsgemäß gefärbt sein können, machen den Boden krümelig, steigern seine Porosität und verbessern die Bodenstruktur. Die einzige Anforderung an die inerten Zusatzstoffe ist, daß sie nicht schaden dürfen. Sie können sauer oder basisch sein und auch dadurch die Wirksamkeit des Kunstdüngers erhöhen und die biologischen sowie chemischen Eigenschaften des Bodens verbessern.

Die Erfindung wird an Hand der folgenden Beispiele näher erläutert.

## Beispiel 1

Bei der Herstellung von Stickstoffkunstdünger wurde an Stelle von 370 g des gewöhnlichen Kalkmehlträgerstoffes, bezogen auf 1 kg Kunstdüngergrundmaterial, dieselbe Menge
dunkelgraue, schwach saure, gut einmischbare und gut haftende
Asche aus einem Kohlekraftwerk zugemischt. Der dadurch dunkel
gefärbte Kunstdünger wurde in an sich bekannter Weise auf die
schneebedeckten Felder ausgestreut.


## Beispiel 2

Es wurde granulierter Stickstoffkunstdünger am Ort seiner
Verwendung in einem gewöhnlichen Betonmischer trocken mit
schwarzem Pulverpigment, wie es zum Kalken verwendet wird,
vermischt. Für 100 kg Kunstdünger wurden 100 g Pigment verwendet. Der Kunstdünger wurde in an sich bekannter Weise
auf das Saatgebiet ausgebracht.


## Beispiel 3

Bei der Herstellung von granuliertem Stickstoffdünger wurden
65% des Gewichtes des Kalkmehlträgerstoffes durch dunkelgraue,
erdfarbene, leicht basische, gut einmischbare und gut haftende
Kraftwerkasche ersetzt. Danach wurde das Gemisch auf einem
Förderband mit 0,08 kg dunkelblauer Oxydpulverfarbe je 100 kg
Endprodukt vermischt und so in einen Bunker transportiert. Der
Kunstdünger wurde in der Fabrik verpackt. Das Ausbringen des
Kunstdüngers erfolgte in an sich bekannter Weise.


Patentansprüche

Patentansprüche

1.) Kunstdünger zur Kopfdüngung von schneebedeckten Saaten, insbesondere Herbstaussaaten, und mehrjährigen Pflanzen, dadurch gekennzeichnet, daß sie mit 0,0001 bis 3 Gew.-% von 1 oder mehr dunklen Farbstoff(en) und/oder 7 bis 93 Gew.-% von 1 oder mehr inerten Zusatzstoff(en) dunkel gefärbt sind.

2.) Kunstdünger nach Anspruch 1, dadurch gekennzeichnet, daß sie mit 1 oder mehr industriellen und/oder landwirtschaftlichen Abfall beziehungsweise Abfällen als inertem Zusatzstoff beziehungsweise inerten Zusatzstoffen dunkel gefärbt sind.

3.) Verwendung der gefärbten Kunstdünger nach Anspruch 1 oder 2 zur Kopfdüngung von schneebedeckten Saaten, insbesondere Herbstaussaaten, und mehrjährigen Pflanzen durch Ausstreuen in an sich bekannter Weise auf das Saatgebiet.

Zusammenfassung